# EUROPEAN PATENT APPLICATION

(11) **EP 1 621 520 A1**
(43) Date of publication of application: **01.02.2006**
(21) Application number: 05291240.9
(22) Date of filing: 09.06.2005
(51) Int. Cl.: C02F 1/12, C02F 1/26

(54) **Apparatus for generating freshwater**

(30) Priority: 10.06.2004 JP 2004172380
(71) Applicant: MITSUBISHI HEAVY INDUSTRIES, LTD., Tokyo 108-8215 (JP)
(72) Inventor: Ogura, Kazumasa, c/o Mitsubishi Heavy Ind. Ltd., Mihara, Hiroshima-ken 729-0393 (JP); Iijima, Masaki, c/o Mitsubishi Heavy Ind. Ltd., Mihara, Hiroshima-ken 729-0393 (JP)
(74) Representative: Intes, Didier Gérard André

(57) **Abstract**

An apparatus (3) for generating freshwater using exhaust combustion gas (11) and seawater (12) includes a water spraying unit (15) that sprays the seawater (12) into the exhaust combustion gas (11); and a freshwater collecting unit (17) that collects the freshwater from the exhaust combustion gas (16) into which the seawater is sprayed.

## Description

### BACKGROUND OF THE INVENTION

### 1) Field of the Invention

The present invention relates to an apparatus for generating freshwater to serve as industrial water, drinking water, living water, and the like, by using exhaust combustion gas and seawater.

### 2) Description of the Related Art

An evaporation method, a reverse osmosis membrane method, an electrodialysis method, a refrigeration method, and the like have been conventionally proposed or put to practical use as methods for generating freshwater from seawater or so-called seawater desalting methods. Among them, the evaporation method and the reverse osmosis membrane method are typical seawater desalting methods. The evaporation method is for evaporating seawater in an evaporator, generating a steam, cooling the generated steam, and collecting the cooled steam as freshwater.

Since the evaporation method requires a large amount of energy for evaporating the water, a system for making an effective use of the energy has been considered. A typical system of this type is a multi-flash method. With this multi-flash method, a plurality of evaporators is arranged in series, and evaporation temperatures of the respective evaporators are changed by changing pressure reduction degrees thereof. In addition, a heat of condensation of a steam generated on the high temperature-side evaporators is used as a preheat for the seawater supplied to low temperature-side evaporators, thereby performing a heat collection. With this method, however, a problem of a need of much heat still remains unsolved.

The reverse osmosis membrane method is for applying a pressure equal to or higher than an osmotic pressure to a seawater side of a membrane using a semi-permeable membrane that selectively transmits water, and for collecting freshwater from the other side of the membrane. This method has, however, a problem of a high power cost because of the application of the pressure equal to or higher than the osmotic pressure to the processed seawater.

To deal with such conventional problems, various methods have been proposed, such as a method for condensing a steam, which is obtained by spray flushing and evaporating warm seawater near a surface of the sea, by cold seawater at a relatively low temperature in the sea (Japanese Patent Application Laid-open No. H2-214585), and a method, similar to the spray flush method, for using drainage water from a condenser provided in an LNG thermal plant as warm seawater and drainage water from an LNG vaporizer provided in the LNG thermal plant as cold seawater (Japanese Patent Application Laid-open No. H9-52082).

Furthermore, a power-generating and seawater-desalting combined method for combining a desalting apparatus with a power generating device, thereby obtaining a heat or a power necessary for the seawater desalting apparatus based on the evaporation method or the reverse osmosis membrane method (Japanese Patent Application Laid-open No. H10-47015).

With the evaporation method represented by the multi-flash method, it is necessary to evacuate the evaporators to vacuum. With the reverse osmosis membrane method, it is necessary to provide a high-pressure pump for feeding a liquid, and to maintain the membrane. Accordingly, in order to provide a small-scale desalination, a construction cost is disadvantageously pushed up.

Furthermore, as common problems to the evaporation methods including the spray flash method, since it is necessary to evaporate the seawater to correspond to a desalination amount, a volume of an evaporator increases, a heat energy necessary for the evaporation increases, and a desalination cost thereby increases.

The combined method of the power generating device with the seawater desalting apparatus can advantageously ensure a high energy-efficiency as a whole. However, this method has problems, such as the equipment is complicated and large in scale, and the combined apparatus is required to be operated while adjusting a load balance between the power generating device and the seawater desalting apparatus.

In view of the conventional problems, it is an object of the present invention to provide a freshwater generating apparatus capable of supplying freshwater even in a small-scale desalination plant.

### SUMMARY OF THE INVENTION

It is an object of the present invention to at least solve the problems in the conventional technology.

An apparatus according to one aspect of the present invention, which is for generating freshwater using exhaust combustion gas and seawater, includes a water spraying unit that sprays the seawater into the exhaust combustion gas; and a freshwater collecting unit that collects the freshwater from the exhaust combustion gas into which the seawater is sprayed.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a conceptual view of a freshwater generating apparatus according to a first embodiment of the present invention;
Fig. 2 depicts the specific device configuration of the freshwater generating apparatus according to the first embodiment; and
Fig. 3 is a conceptual view of a freshwater generating apparatus according to a second embodiment of the present invention.

### DETAILED DESCRIPTION

Exemplary embodiments of an apparatus for generating freshwater according to the present invention will be explained below in detail with reference to the accompanying drawings. It should be noted that that the invention is not limited thereto. Furthermore, constituent elements in the embodiments below include elements that persons skilled in the art can easily assume or that are substantially the same.

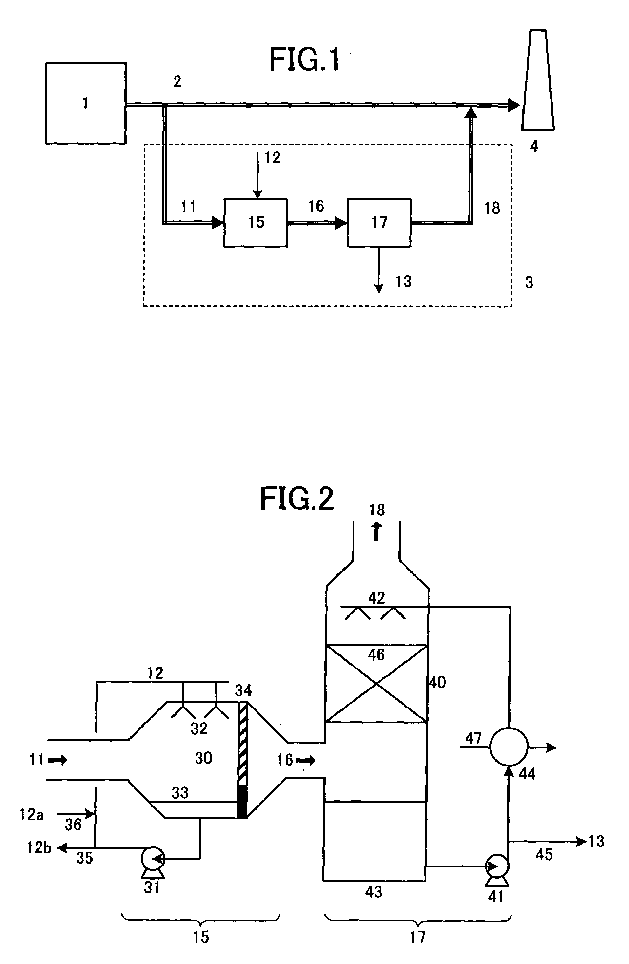

Fig. 1 is a conceptual view of the freshwater generating apparatus according to the first embodiment of the present invention. The freshwater generating apparatus 3 is an apparatus for generating freshwater 13 using an exhaust combustion gas 11 from a burning unit 1 and seawater 12. The freshwater generating apparatus 3 includes a water spraying unit 15 that sprays the seawater 12 into the exhaust combustion gas 11 and a freshwater collecting unit 17 that cools an exhaust combustion gas 16 into which the seawater is sprayed.

The exhaust combustion gas 11 used in the freshwater generating apparatus 3 is branched from a main gas flue 2 according to a necessary desalination amount, and a flow rate of the exhaust combustion gas 11 is adjusted by a gas volume adjustment unit (not shown) such as a damper. The freshwater generating apparatus 3 can be disposed on the main gas flue 2. In this case, the burning unit 1 needs to be stopped during maintenance of the freshwater generating apparatus 3. On the other hand, when the freshwater generating apparatus 1 is disposed separately from the main gas flue 2 as shown in Fig. 1, it is unnecessary to stop the burning unit 1 even for the maintenance of the freshwater generating apparatus 3. Therefore, an excellent operativity is ensured. While an exhaust combustion gas 18 after the freshwater generating apparatus 3 collects the freshwater 13 is returned again to the main gas flue 2 and discharged from an exhaust flue 4. Alternatively, a different gas flue and a different exhaust flue can be provided for the exhaust combustion gas 18.

According to the first embodiment, the seawater 12 is evaporated in the water spraying unit 15 by an exhaust heat of the exhaust combustion gas 11, so that it is unnecessary to apply a fresh heat. Furthermore, the freshwater 13 can be collected from not only the fluid evaporated from the seawater 12 but also the fluid inherent in the exhaust combustion gas 11. It is, therefore, possible to generate more freshwater as compared with the simple evaporation method. To collect the freshwater 13 from the fluid in the exhaust combustion gas 11, a temperature of the exhaust combustion gas 11 needs to be set equal to or lower than a temperature (dew point) at which the fluid in the exhaust gas is condensed. However, by spraying the seawater 12 using the water spraying unit 15, the fluid is humidified and cooled until the fluid turns into a saturation state. As a result, the temperature of the exhaust combustion gas decreases and the dew point increases, so that a reduction in a size of the cooling unit provided in the freshwater collecting unit 17 can be realized.

As a fuel for the burning unit 1, a clean fuel that hardly causes generation of a sulfur oxide, a dust, and the like after being burned is preferably used. When the sulfur oxide, the dust, and the like exist in the exhaust combustion gas, they can be possibly mixed into the collected freshwater. To eliminate them, an additional device is necessary. Examples of such a clean fuel include hydrocarbon, alcohol, and coal gasified gas from which impurities are eliminated. It is particularly preferable to use one of light hydrocarbons such as natural gas and liquefied petroleum gas as the clean gas. These fuels are higher in hydrogen content, so that a water concentration in the exhaust combustion gas 11 is higher. As a result, a saturation temperature of the exhaust combustion gas 16 at an exit of the water spraying unit is higher, making it possible to collect the freshwater in larger amounts. Furthermore, since impurities other than the hydrocarbon exist only in small amounts, amounts of impurities, for example, salt in the freshwater can be suppressed to be small. If coal, heavy oil or the like is used as the fuel, by contrast, the saturation temperature of the exhaust combustion gas 16 is lower and an additional device for eliminating impurities is required. As a result, the cost of desalination is increased.

Examples of a type of the burning unit 1 include a boiler, a turbine, and an engine. Among them, the boiler is particularly preferably used as the burning unit 1 for the following reason. When the boiler is used, an excess air ratio during burning can be suppressed to be low. Therefore, the water concentration in the exhaust combustion gas 11 is increased and the freshwater collection amount can be increased. As the exhaust combustion gas 11, a clean exhaust gas that hardly contains the sulfur oxide, the dust and the like, and that has a high water concentration is preferably used. The exhaust gas obtained by burning the light hydrocarbon such as the natural gas or the liquefied petroleum oil in the boiler is more preferable in those respects.

With reference to Fig. 2, a specific example of the freshwater generating apparatus will be explained.

As shown in Fig. 2, the freshwater generating apparatus includes the water spraying unit 15 that sprays the seawater 12 into the exhaust combustion gas 11 and the freshwater collecting unit 17 that cools the exhaust combustion gas 16 humidified and cooled by the seawater in the water spraying unit 15 and that collects the freshwater 13.

The exhaust combustion gas 11 introduced into the water spraying unit 15 is preferably an exhaust combustion gas having a temperature equal to or higher than 130°C after the heat is collected for the burning unit. The reason is as follows. When the temperature of the exhaust combustion gas 11 is low, the temperature of the exhaust combustion gas 16 cooled and humidified after spraying the seawater. As a result, the water amount retained in the exhaust combustion gas 16 is reduced and a collectable amount of the freshwater is reduced. Accordingly, the higher the temperature of the exhaust combustion gas 11 is, the greater the freshwater collection amount becomes. However, since the heat collection amount is reduced on the burning unit side, the exhaust combustion gas at a temperature equal to or lower than 200°C is practically used.

The water spraying unit 15 includes a gas-liquid contact unit 30 that causes a gas-liquid contact between the seawater 12 and the exhaust combustion gas, a seawater supply pump 31, a seawater supply nozzle 32, a seawater unevaporated-water receiving unit 33, and a demisting unit 34. The seawater 12 is pumped up by the seawater supply pump 31 to the seawater unevaporated-water receiving unit 33, and sprayed into the exhaust combustion gas 11 by the seawater supply nozzle 32. A part of the seawater 12 sprayed by the seawater supply nozzle 32 is evaporated by the heat of the exhaust combustion gas 11, whereas a remainder thereof enters the seawater unevaporated-water receiving unit 33.

A salt concentration in the seawater in the seawater unevaporated-water receiving unit 33 is slightly increased by evaporation. Therefore, a part of the seawater therein is returned to the sea via a pipe 35 and fresh seawater 12a is supplied from a pipe 36. Preferably, solid components of the seawater 12a newly supplied from the pipe 36 are eliminated by an operation such as filtration before the seawater 12a is supplied.

A type of the gas-liquid contact unit in the water spraying unit 15 is not limited to a specific form and any normally used gas-liquid contact unit can be used. In the example of the water spraying unit shown in Fig. 2, a spray tower method for simply spraying the seawater into the exhaust combustion gas 11 from the seawater supply nozzle 32 is shown. Alternatively, a liquid column tower method for arranging a spray header in a lower portion and blowing up a liquid or a packed tower method for providing a packed object for the gas-liquid contact can be used. In addition, a direction in which the exhaust combustion gas 11 flows can be either a horizontal direction shown in Fig. 2 or an upward flow direction or a downward flow direction as a vertical direction.

The demisting unit 34 is disposed on an exhaust combustion gas exit of the water spraying unit 15. This is intended to prevent a part of the seawater 12 sprayed into the exhaust combustion gas 11 from entering the freshwater collecting unit 17 to accompany the exhaust combustion gas as a mist, being mixed with the collected freshwater, and increasing the salt content in the freshwater. Therefore, a performance of this demisting unit 34 is determined, so that the salt concentration of the generated freshwater is equal to or lower than a required specified value.

On the other hand, the salt concentration in the seawater in the seawater unevaporated-water receiving unit 33 of the water spraying unit 15 increases by the evaporation of the seawater by the water spraying unit. When the salt concentration increases, a boiling point rises. As a result, the timing of the evaporation becomes late, and problems such as scaling, corrosion of materials, and an increase in the salt concentration in the collected freshwater occur. To prevent these problems, a part of the seawater is discharged as purge seawater 12b from the pipe 35, and the fresh seawater 12a is supplied from the pipe 36 instead. This seawater supply can be performed by either using the circulation pipes for spray as shown in Fig. 2 or supplying the seawater to the seawater unevaporated-water receiving unit 33.

The supplied sweater 12a at a higher temperature is advantageous because, when the temperature of the supplied seawater 12a is higher, the evaporation in the water spraying unit 15 is more accelerated and the saturation temperature of the exhaust combustion gas 16 at the exit is higher. Accordingly, when the seawater used by the freshwater collecting unit 17 (described later) for cooling or the high-temperature seawater used by the plant side such as the boiler for cooling is used, a higher desalination efficiency can be attained.

The seawater can be sprayed by a one-path flow instead of circulating the seawater from the seawater unevaporated-water receiving unit 33 as shown in Fig. 2. In this case, the seawater 12 is fed to the seawater supply nozzle 32 by the seawater supply pump 31 or a pump that replaces the pump 31, and sprayed. Furthermore, the unevaporated seawater is temporarily collected in the unevaporated-water receiving unit 33 and then discharged from the pipe 35 without being used in a circulating manner. In this case, the temperature of the sprayed seawater decreases, so that the saturation temperature of the exhaust combustion gas 16 decreases and a desalination amount is slightly reduced. Nevertheless, this can advantageously simplify the apparatus.

The exhaust combustion gas 16 output from the water spraying unit 15 then enters the freshwater collecting unit 17. This freshwater collecting unit 17 includes a gas-liquid contact unit 40 that causes a gas-liquid contact between the humidified exhaust combustion gas 16 and the freshwater, a freshwater supply pump 41, a freshwater supply nozzle 42, a freshwater collection tank 43, and a freshwater cooling unit 44.

The exhaust combustion gas 16 humidified and cooled by the water spraying unit 15 is in direct contact with the freshwater supplied from the freshwater supply pump 41 as the gas-liquid contact, thereby cooling the exhaust combustion gas 16. As a result, the fluid in the exhaust combustion gas 16 is condensed and the resultant exhaust combustion gas 16 enters, together with the freshwater from the freshwater supply nozzle 42, the freshwater collection tank 43. The freshwater 13 collected in the freshwater collection tank 43 is partially discharged from a pipe 45 whereas a remainder thereof is cooled by the freshwater cooling unit 44 and used in a circulating manner for cooling the exhaust combustion gas 16.

A type of the gas-liquid contact unit of the freshwater collecting unit 17 is not limited to a specific form similarly to the water spraying unit 15, and any normally used gas-liquid contacting unit is can be used. While in Fig. 2, an example of providing a packed bed 46 for the gas-liquid contact to accelerate the cooling of the exhaust combustion gas 16 is shown, the spray tower or the liquid column tower can be employed without providing the packed bed.

A standard cooling temperature for cooling the exhaust combustion gas 16 is preferably 35°C to 50°C for the following reason. If the cooling temperature is too high, a saturated water concentration in the cooled exhaust combustion gas increases and the amount of the collected freshwater (desalination amount), therefore, decreases. This is because, when the cooling temperature decreases, the collected freshwater amount increases, and the freshwater cooling unit 44 is made larger in scale, whereby there is no merit in increasing the collected freshwater amount.

The freshwater cooling unit 44 is not limited to a specific form as long as the device can indirectly cool the freshwater 13 using a low-temperature fluid 47. For example, a plate heat exchanger can be used. In the freshwater cooling unit 44 shown in Fig. 2, an example of providing the indirect heat exchanger that cools the freshwater 13 using the low-temperature fluid 47 on a cooling freshwater circulation line is shown. Alternatively, the indirect heat exchanger that cools the freshwater 13 using the low-temperature fluid 47 can be provided in the freshwater collection tank 43.

As the low-temperature fluid 47 used in the freshwater cooling unit 44, the seawater is normally used. However, the low-temperature fluid 47 is not limited to the seawater as long as the fluid 47 can cool the freshwater down to a temperature equal to or lower than the cooling temperature for cooling the exhaust combustion gas. When a liquefied natural gas is used as the fuel, a cold heat of the liquefied natural gas can be used. When the freshwater can be easily cooled using the cold heat or the like of the liquefied natural gas, it is preferable to set the cooling temperature as low as possible to increase the collected freshwater amount.

To cool the exhaust combustion gas 16, not the gas-liquid contact method but a method for generating the freshwater by assembling the indirect heat exchanger into the packed bed 46 and cooling the exhaust combustion gas 16 can be considered. However, the method according to the present invention shown in Fig. 2 is advantageous over the latter method since the cooled collected freshwater is brought into a direct contact with the gas, and the method according to the present invention can thereby more effectively cool the exhaust combustion gas.

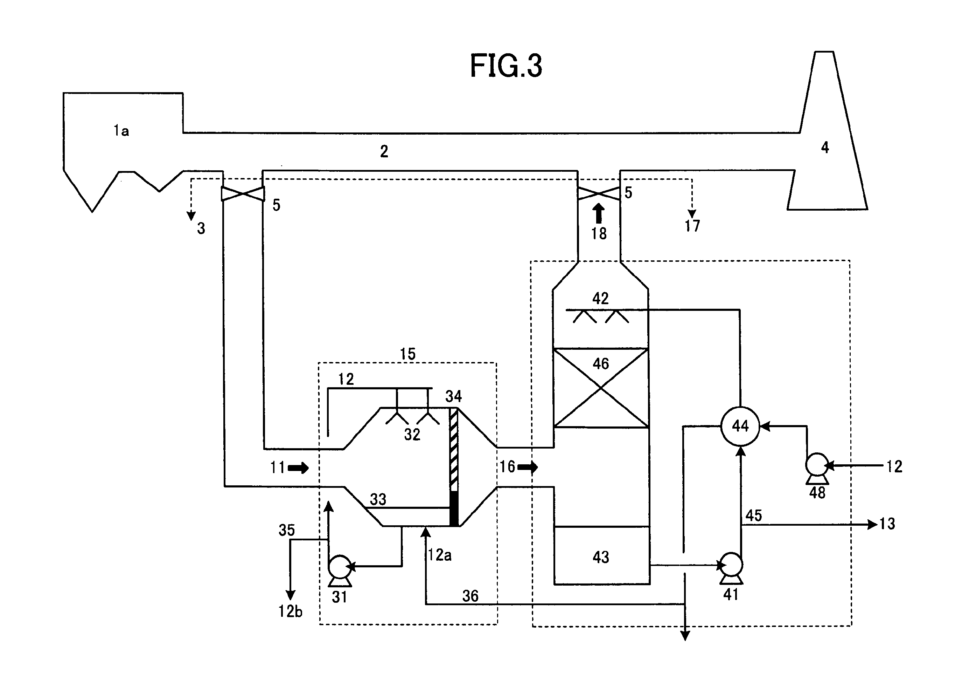

Fig. 3 is a schematic diagram of an example of a freshwater generating apparatus according to a second embodiment of the present invention, when the natural gas is used as a fuel and a boiler exhaust combustion gas is used as the exhaust gas. Since the freshwater generating apparatus according to a second embodiment of the present invention is substantially equal to that according to the first embodiment, like components are designated with like reference signs, and redundant explanations thereof will be omitted.

As shown in Fig. 3, the exhaust combustion gas from a boiler 1 a is branched from the main gas flue 2 and fed to the freshwater generating apparatus 3. By branching the exhaust combustion gas from the main gas flue and feeding the exhaust combustion gas to the freshwater generating apparatus, the following advantages can be attained. It is unnecessary to stop the boiler for a checking and the like of the freshwater generating apparatus. In addition, the apparatus can be employed according to a necessary desalination amount. For these advantages, a damper 5 is provided in a branch portion from the main gas flue. This damper 5 can be provided with a gas volume adjustment device so as to be able to branch the exhaust combustion gas according to the desalination amount when it is necessary.

The exhaust combustion gas 11 branched from the main gas flue 2 is fed first to the water spraying unit 15.

The water spraying unit 15 includes the seawater supply pump 31, the seawater supply nozzle 32, the seawater unevaporated-water receiving unit 33, and the demisting unit 34. The exhaust combustion gas 11 fed to the water spraying unit 15 comes into contact with the seawater sprayed by the seawater supply nozzle 32, and humidified and cooled down to near the saturation temperature.

The exhaust combustion gas 11 entering the water spraying unit 15 normally has a water content of less than 16% although the water content differs according to a composition of the natural gas serving as the fuel or boiler burning conditions. In addition, the temperature of the exhaust combustion gas 11 is near 200°C although the temperature differs according to boiler conditions. For this reason, the water concentration in the exhaust combustion gas 11 is far apart from the saturation state. By humidifying and cooling the exhaust combustion gas 11 down to the saturation temperature, more fluid in the seawater can be evaporated.

Furthermore, a seawater spray amount is determined according to the gas-liquid contacting unit method. When the spray tower or the liquid column tower is used, the standard seawater spray amount is normally about 0.1 to 4 (I/Nm³) relative to the exhaust combustion gas amount.

When the temperature of the exhaust combustion gas at an inlet of the water spraying unit is about 180°C, this saturation temperature is about 60°C although the saturation temperature differs according to the water concentration in the exhaust combustion gas 11, the temperature of the exhaust combustion gas 11, the temperature of the seawater supplied from the seawater supply nozzle or the like. The water content in the exhaust combustion gas at the exit of the water spraying unit increases by about 6% to near 22%. After the mist component of this humidified and cooled exhaust combustion gas is eliminated by the demisting unit, the resultant exhaust combustion gas is fed to the freshwater collecting unit 17. The mist is eliminated by the demisting unit so that the salt concentration in the freshwater collected by the freshwater collecting unit 17 is equal to or lower than a required level (for example, 250 ppm that is the WTO standard).

On the other hand, the unevaporated component of the seawater sprayed from the seawater supply nozzle is collected into the seawater unevaporated-water receiving unit 33 in the lower portion of the water spraying unit 15. Thereafter, a part of the unevaporated component of the seawater is discharged as the purge seawater 12b by the pipe 35 for adjustment of the salt concentration whereas a remainder thereof is used again for humidifying and cooling the exhaust combustion gas by the seawater supply pump 31.

The freshwater collecting unit 17 includes the gas-liquid contacting unit that has the freshwater collection tank 43 provided in a lower portion and the packed bed 46 for the gas-liquid contact provided in an upper portion. The freshwater supply nozzle 42 for spraying the freshwater cooled by the freshwater cooling unit 44 is provided above the gas-liquid contacting unit. The humidified and cooled exhaust combustion gas 16 comes into contact with the cooled freshwater sprayed from the freshwater supply nozzle, and the temperature of the exhaust combustion gas 16 decreases. The fluid in the exhaust combustion gas 16 in a supersaturation state is condensed and enters the freshwater collection tank 43. When the saturated water concentration shown above is, for example, 22% and the exhaust combustion gas having such a saturated water concentration is cooled down to near 45°C, the saturated water concentration in the burned gas decreases to near 9%. In addition, the water of slightly less than 13% is condensed and the condensed water enters the freshwater collection tank 43. On the other hand, the exhaust combustion gas 18 cooled by the freshwater is fed to the main gas flue 2 and discharged from the exhaust flue 4.

The freshwater collected into the freshwater collection tank 43 and sprayed for cooling and the condensed water from the exhaust combustion gas 16 are discharged from the freshwater supply pump 41. They are collected as the freshwater 13 by as much as an amount corresponding to the condensed water from the exhaust combustion gas 16, whereas a remainder thereof is fed to the freshwater cooling unit 44.

The freshwater fed to the freshwater cooling unit 44 is indirectly cooled by the seawater 12 fed by a cooling seawater pump 48, fed to the freshwater supply nozzle 42 provided above the gas-liquid contact unit of the freshwater collecting unit 17, and used again for cooling the exhaust combustion gas. On the other hand, a part of the seawater the temperature of which is raised by a heat exchange with the freshwater in the freshwater cooling unit 44 is supplied to the seawater unevaporated-water receiving unit of the water spraying unit 15 through the pipe 36 as the supplemental seawater 12a for the water spraying unit 15. The remainder thereof is discharged into the sea. When the flow rate of this supplemental seawater 12a is higher, an increase in the salt concentration in the seawater supplied in a circulating manner by the water spraying unit is more suppressed. However, the temperature of the supplied seawater 12a is normally lower than the temperature of the circulating seawater. Due to this, the temperature of the exhaust combustion gas 16 at the exit of the water spraying unit decreases and the desalination amount is reduced. Conversely, if the flow rate of the supplemental seawater 12a is too low, then the salt component in the seawater 12a is condensed and the problems such as the boiling point rise and the scaling unfavorably occur.

According to the above embodiments, the freshwater of a volume little over about 100 m³ can be generated from the exhaust combustion gas of a volume of 1 million Nm³. In addition, even if the fuel is changed from the natural gas to the liquefied petroleum gas, the seawater can be similarly generated except that the collectable desalination amount is slightly reduced by the reduction in the water concentration in the exhaust combustion gas 11 (under the same conditions as those according to the embodiments).

As describe above, according to the present invention, the freshwater can be effectively collected even from the fluid inherently present in the exhaust combustion gas. An evaporation amount of the seawater necessary for desalination can be, therefore, reduced. In addition, the heat used for evaporating the seawater is an exhaust heat, so that it is unnecessary to apply a fresh heat. At the same time, the exhaust combustion gas for collecting the fluid in the exhaust combustion gas is cooled, and a cooling cost can be, therefore, reduced.

Furthermore, according to the present invention, it is unnecessary to additionally provide a special device such as a pressure reducing device normally required in the evaporation method or the pressurizing device for the reverse osmosis membrane method. It is, therefore, possible to generate freshwater at an economical cost even in a small-scale desalination plant.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An apparatus (3) for generating freshwater using exhaust combustion gas (11) and seawater (12), the apparatus (3) **characterized in that** it comprises:
a water spraying unit (15) that sprays the seawater (12) into the exhaust combustion gas (11); and
a freshwater collecting unit (17) that collects the freshwater from the exhaust combustion gas (16) into which the seawater is sprayed.

2. The apparatus (3) according to claim 1, **characterized in that** the exhaust combustion gas (11) is exhaust gas obtained from burning a clean fuel.

3. The apparatus (3) according to claim 1, **characterized in that** the exhaust combustion gas (11) is exhaust gas obtained from burning a clean fuel in a burning unit (1).

4. The apparatus (3) according to claim 3, **characterized in that** the burning unit (1) is a boiler.

5. The apparatus (3) according to any one of claims 1 to 4, **characterized in that** the water spraying unit (15) includes
an unevaporated-water receiving unit (33) that receives an unevaporated component of the seawater sprayed, the unevaporated-water receiving unit (33) being provided at a bottom of the water spraying unit (15); and
a demisting unit (34) that eliminates a mist component of the seawater sprayed accompanying the exhaust combustion gas (11), the demisting unit (34) being provided at an exit of the water spraying unit (15).

6. The apparatus (3) according to any one of claims 1 to 5, **characterized in that** the freshwater collecting unit (17) includes
a gas-liquid contacting unit (40) that causes a gas-liquid contact between the exhaust combustion gas (16) and the freshwater collected;
a circulating unit (41) that circulates the freshwater collected to the gas-liquid contacting unit (40); and
a cooling unit (44) that cools the freshwater circulated.

7. The apparatus (3) according to claim 6, **characterized in that** the cooling unit (44) is an indirect heat exchanger that uses the seawater as cooling water (47).

8. The apparatus (3) according to claim 7, **characterized in that** it further comprises a supplying unit (36) that supplies the seawater that was used for cooling in the cooling unit (44) to the water spraying unit (15) for refilling the seawater to be sprayed.
